# EUROPEAN PATENT SPECIFICATION

(11) **EP 0 910 152 B1**
(45) Date of publication and mention of the grant of the patent: **19.09.2001**
(21) Application number: 98114632.7
(22) Date of filing: 04.08.1998
(51) Int. Cl.: H02K 3/52

(54) **A stator for electric motors with an electrically insulating co-moulded covering**
Stator für elektrische Motoren mit einer isolierend geformten Bedeckung
Stator pour moteurs électriques avec revêtement moulé isolé électriquement

(30) Priority: 16.10.1997 IT TO970909
(43) Date of publication of application: 21.04.1999
(73) Proprietor: Bitron S.p.A., 10064 Pinerolo(Torino) (IT)
(72) Inventor: Barbati, Angelo, 21049 Tradate (Varese) (IT); D'Ascanio, Nicola, 20131 Milano (IT); Casati, Sergio, 23888 Rovagnate (Lecco) (IT); Moretto, Giorgio, 10051 Avigliana (Torino) (IT)
(74) Representative: Di Francesco, Gianni

(56) References cited:
- DE-A- 3 227 400
- US-A- 4 808 872
- US-A- 4 818 911
- PATENT ABSTRACTS OF JAPAN vol. 018, no. 493 (E-1606), 14 September 1994 & JP 06 165423 A (FUJITSU GENERAL LTD), 10 June 1994
- PATENT ABSTRACTS OF JAPAN vol. 017, no. 511 (E-1432), 14 September 1993 & JP 05 130761 A (TOSHIBA CORP), 25 May 1993
- PATENT ABSTRACTS OF JAPAN vol. 017, no. 261 (E-1369), 21 May 1993 & JP 05 003653 A (SHIBAURA ENG WORKS CO LTD), 8 January 1993
- PATENT ABSTRACTS OF JAPAN vol. 018, no. 493 (E-1606), 14 September 1994 & JP 06 165424 A (SHIBAURA ENG WORKS CO LTD), 10 June 1994

## Description

The present invention falls within the field of stators for electric motors including an inner rotor and an outer stator. More particularly, the invention relates to a stator having an electrically insulating coating which, besides insulating the windings from the iron stator, also forms walls in form of flanges defining winding seats for a plurality of coils disposed in two or more radially separate crowns.

JP 05130761 discloses a stator for an electric motor including an inner rotor and an outer stator, the stator comprising radial teeth with a plurality of wall portions substantially perpendicular to the teeth and a plurality of coils arranged in two radically spaced crowns.

A problem encountered with prior art solutions concerns the insulation and integrity of the electric wire forming the peripheral radial crowns, disposed radially outwardly of the first, radially inner winding crown.

As well known in the art, the winding operation provides for a sequential winding of the crowns starting from the radially innermost. Therefore, whilst for the first crown the lengths of wire passing from one coil to that of the adjacent stator tooth are taut against the outer surface of the radially innermost wall of the insulating coating, the corresponding lengths of the outer crowns are free. For winding the wire coils, in fact, a gap must be provided between the flanges separating two radially adjacent crowns to allow the wire to be wound around each stator tooth.

Owing to vibration which the electric motor is inevitably subject during operation, the free lengths of wire are likely to become slack with time and, consequently, contact electrically conductive portions of the motor, thereby causing current leakage which jeopardise the motor's operation. Prolonged vibrations may in some instances cause the wire to break at one of said free lengths.

It is an object of the present invention to provide a device capable of overcoming the above discussed prior art drawbacks.

In accordance with one aspect of the invention as claimed, this object is accomplished by the provision of a stator for an electric motor including an inner rotor and an outer stator, the stator comprising a plurality of pole shoes with radial teeth on which there is co-moulded an electrically insulating coating, the coating forming on each tooth a plurality of wall portions substantially perpendicular to the same tooth, said wall portions being radially spaced for defining the winding seats for a plurality of coils arranged in at least two radially spaced crowns, the wall portions intermediate two adjacent crowns being provided with insulating pivoted tongue elements, said insulating tongue elements having a first, passive position, in which said elements are oriented radially to allow the winding of a crown of coils in the seats delimited outwardly by said intermediate wall portions, and a second, active position, in which said tongue elements are oriented tangentially and secured to the intermediate wall portion of the adjacent tooth to insulate the lengths of electric wire connecting two adjacent coils belonging to a same crown of windings delimited inwardly by the intermediate wall portions.

In order that the present invention may be well understood there will now be described a preferred embodiment thereof, given by way of example, reference being made to the accompanying drawings, in which:
- FIG. 1: is a transverse cross sectional view of a stator assembled in an outer housing;
- FIG. 2: is a front view of the stator as seen according to arrow A of FIG. 1;
- FIG. 3: is a front view of the stator as seen according to arrow A of FIG. 1, where the outer housing has been removed;
- FIG. 4: is a perspective view of the part of stator shown in FIG. 3 in a first arrangement for winding the innermost coil crown;
- FIG. 5: is a view of a detail of FIG. 4 to an enlarged scale;
- FIG. 6: is a perspective view of the part of stator shown in FIG. 3 in a second arrangement for winding an outer crown of coils; and
- la FIG. 7: is a view of a detail of FIG. 6 to an enlarged scale.

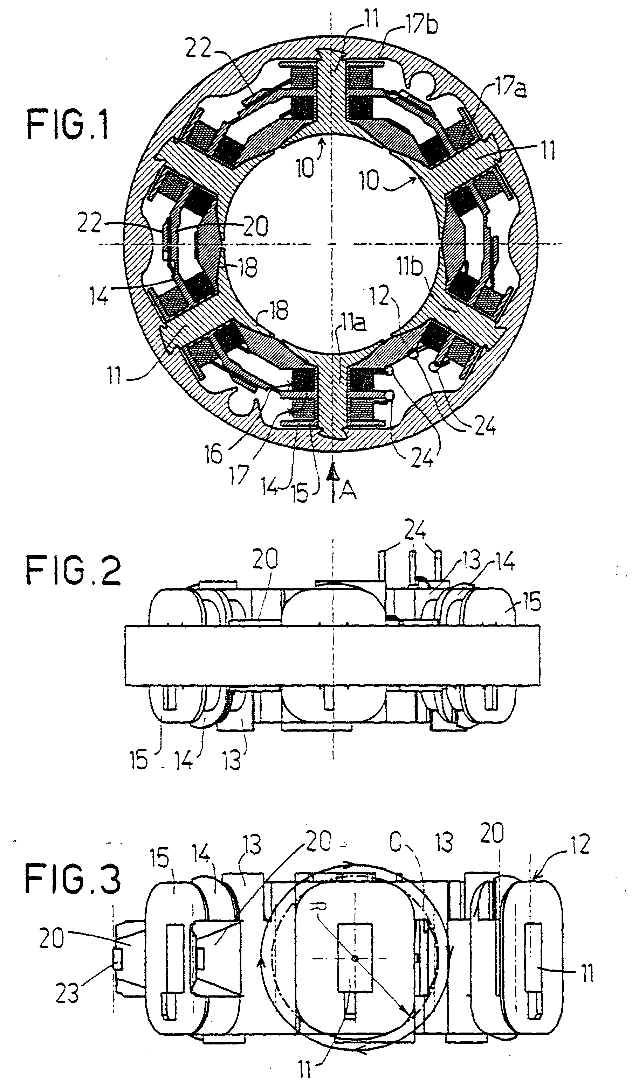

Referring initially to figures 1 and 2, numeral 10 designates the stator pole shoes, in number of six in the illustrated example. Each pole shoe is made up of a stack of metal laminations of substantially T shape in which there can be distinguished an outwardly oriented portion in form of a radial tooth 11.

The pole shoes are covered by co-moulding a layer of electrically insulating plastic material 12. Besides holding the shoes in the star-like arrangement and insulating the windings from the stator iron, the insulating covering 12 forms on each tooth a plurality of radially spaced wall portions 13, 14, 15 in form of flanges perpendicular to the teeth 11. The wall portions define the winding seats for a plurality of wire coils arranged in at least two radially displaced crowns, an inner crown 16 and an outer crown 17. Although the drawings refer to an exemplary stator comprised of only two crowns, it is understood that the present invention is equally applicable to stators having a number of crowns exceeding two, according to design requirements. More particularly, in the present example the co-moulded plastic covering 12 forms on each tooth a first, radially inner wall portion 13, a second, intermediate radial wall portion 14 which separates and electrically insulates the inner crown of windings 16 from the outer crown 17, and a third, radially outer wall portion 15.

In passing from a coil to the one of the adjacent tooth, the wire of the inner winding crown 16 rests against the inner wall 13 of the co-moulded covering 12 which insulates the wire from the T-shaped enlarged central portion 18 of the shoes.

In accordance with the present invention, the lengths of wire forming the coils of the outer winding crown 17 in passing from one coil 17a to the adjacent one 17b is guided, protected and electrically insulated by a plurality of pivoted tongues 20 formed integral with the co-moulded covering. In the co-moulding operation, there is formed a thinner vertical hinge portion 21 connecting the pivoted tongues 20 to the intermediate wall portions 14. The thinner portions 21 act as hinges allowing to tilt the pivoted tongues 20 from a first, passive position shown in FIGS. 1, 2, 4 and 5, to a second, active position shown in FIGS. 3, 6 and 7. In the first position, the pivoted tongues 20 are oriented radially so as not to interfere with the winding machine forming the coils of the inner crown 16 in the winding seats outwardly delimited by the intermediate wall portions 14. Upon terminating the winding of the inner crown of coils, the pivoted tongues are rotated about 90° in a tangential direction and hooked to the intermediate wall portion 14 of the adjacent tooth so as to provide an insulating support for lengths of electric wire connecting adjacent coils belonging to the same outer crown 17. Preferably, a pocket 22 is formed on the radially outer side of each pivoted tongue to better insulate, protect and contain said lengths of wire. The pockets 22 are advantageously inclined in the direction adjoining the point at which the wire comes out of a coil to the point at which the wire begins forming the adjacent coil.

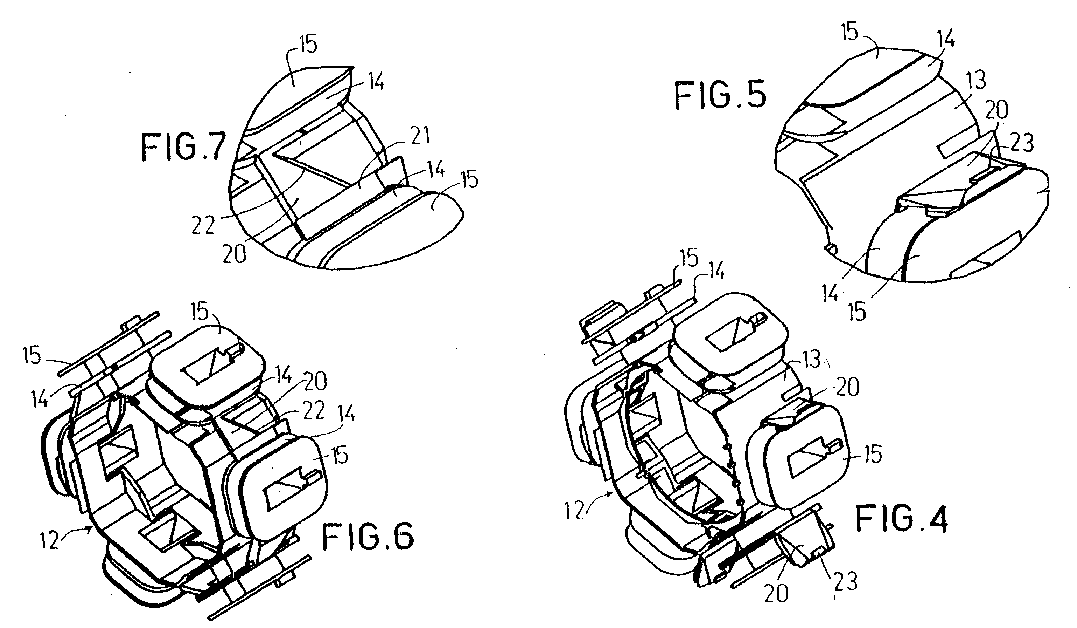

As shown in FIG. 5, formed at the free end of each pivoted tongue is a hooking tab 23. When the pivoted tongues are oriented tangential, the tabs 23 can be snapfitted onto the edge of the adjacent intermediate wall portion.

Preferably, the pivoted tongues 20 are co-moulded in the passive radial arrangement (as shown in FIG. 5), joined to the radially outer wall portion 15 disposed on the same tooth by means of a thin provisional connecting portion (not shown) that can be easily broken when the pivoted tongues are rotated from the first to the second position, as discussed herein above.

As apparent, no pivoted tongue is provided between the wall portions of stator teeth 11a and 11b (FIG. 1) at which the winding terminations 24 are located.

Finally, with reference to FIG. 3, in order to facilitate the winding of the inner crown of coils 16, the geometry of the pivoted tongues and their supporting intermediate wall portions 14 is suitably designed such that, in the hooked position, the contour of the each pivoted tongue in the relevant tangential plane is contained within a circle C circumscribing the wall portion 14.

## Claims

1. A stator for an electric motor including an inner rotor and an outer stator, the stator comprising a plurality of pole shoes (10) with radial teeth (11) on which there is co-moulded an electrically insulating coating (12), the coating forming on each tooth (11) a plurality of wall portions (13, 14, 15) substantially perpendicular to the same tooth, said wall portions being radially spaced .for defining the winding seats for a plurality of coils arranged in at least two radially spaced crowns (16, 17), the wall portions (14) intermediate two adjacent crowns (16, 17) being provided with insulating pivoted tongue elements (20), said insulating tongue elements having a first, passive position, in which said elements (20) are oriented radially to allow the winding of a crown of coils (16) in the seats delimited outwardly by said intermediate wall portions (14), and a second, active position, in which said tongue elements (20) are oriented tangentially and secured to the intermediate wall portion (14) of the adjacent tooth to insulate the lengths of electric wire connecting two adjacent coils belonging to a same crown (17) of windings delimited inwardly by the intermediate wall portions (14).

2. A stator as claimed in claim 1, **characterised in that** said tongue elements (20) are comprised of wire containing means (22) in form of pockets for containing the lengths of wire between two adjacent coils.

3. A stator as claimed in claim 2, **characterised in that** said wire containing means (22) form a guide inclined in the direction adjoining the point at which the wire comes out of a coil to the point at which the wire begins forming the adjacent coil.

4. A stator as claimed in claim 1, **characterised in that** said pivoted tongue elements (20) are co-moulded integrally with said covering (12).

5. A stator as claimed in claim 4, **characterised in that** said pivoted tongue elements (20) are connected to said intermediate wall portions (14) by means of co-moulded thinner and flexible vertical hinge portions (21).

6. A stator as claimed in claim 1, **characterised in that** each of said pivoted tongue elements (20) is provided with a hooking means (23) for snap fitting to the intermediate wall portion (14) of the adjacent tooth.

7. A stator as claimed in claims 5 and 6, **characterised in that** said snap hooking means (23) are located on each of said pivoted tongue elements (20) at a free side opposite to the side connected (21) to the intermediate wall portions (14).

8. A stator as claimed in claim 1, **characterised in that** in said first position, the overall dimension of the pivoted tongue elements in the relevant tangential planes is contained within a circle (C) circumscribing the relevant intermediate wall portions (14).

9. A stator as claimed in claim 4, **characterised in that** said pivoted tongue elements (20) are co-moulded in said first position joined to the radially outer wall portion (15) disposed on the same tooth by means of a thin provisional connecting portion.

## Patentansprüche

1. Stator für einen elektrischen Motor, umfassend einen inneren Rotor und einen äußeren Stator, wobei der Stator eine Vielzahl von Polschuhen (10) mit radialen Zähnen (11) umfaßt, auf denen eine elektrische Isolierbeschichtung (12) gemeinsam geformt ist, wobei die Beschichtung auf jedem Zahn (11) eine Vielzahl von Wandabschnitten (13, 14, 15) bildet, die im wesentlichen senkrecht zum gleichen Zahn sind, wobei die Wandabschnitte radial mit Zwischenräumen angeordnet sind, um die Wicklungsauflagen für eine Vielzahl von Spulen festzulegen, die in mindestens zwei radial mit Zwischenräumen angeordneten Kronen (16, 17) angeordnet sind, wobei die Wandabschnitte (14) zwischen zwei benachbarten Kronen (16, 17) liegen, die mit isolierenden Zungenelementen (20) versehen sind, wobei die isolierenden Zungenelemente eine erste, passive Lage aufweisen, in der die Elemente (20) radial ausgerichtet sind, um die Wicklung einer Krone von Spulen (16) in den Auflagen zu ermöglichen, die nach außen durch die dazwischenliegenden Wandabschnitte (14) begrenzt sind, und eine zweite, aktive Lage, in der die Zungenelemente (20) tangential ausgerichtet sind und an den dazwischenliegenden Wandabschnitt (14) des benachbarten Zahns befestigt sind, um die Längen elektrischen Drahtes zu isolieren, die zwei benachbarten Spulen miteinander verbinden, die einer selben Krone (17) von Wicklungen angehören, die nach innen durch die dazwischenliegenden Wandabschnitte (14) begrenzt ist.

2. Stator nach Anspruch 1, **dadurch gekennzeichnet, daß** die Zungenelemente (20) Drahtaufnahmemittel (22) in der Form von Taschen zur Aufnahme der Drahtlangen zwischen zwei benachbarten Spulen aufweisen.

3. , Stator nach Anspruch 2, **dadurch gekennzeichnet, daß** die Mittel (22), die den Draht aufnehmen, eine Führung bilden, die in die Richtung geneigt ist, die dem Punkt benachbart ist, an dem der Draht aus einer Spule tritt, zu dem Punkt, an dem der Draht beginnt, die benachbarte Spule zu bilden.

4. Stator nach Anspruch 1, **dadurch gekennzeichnet, daß** die drehbaren Zungenelemente (20) vollständig mit der Beschichtung (12) gemeinsam geformt sind.

5. Stator nach Anspruch 4, **dadurch gekennzeichnet, daß** die drehbaren Zungenelemente (20) mit den dazwischenliegenden Wandabschnitten (14) mit Hilfe von gemeinsam geformten dünneren und flexiblen senkrechten Gelenkteilen (21) verbunden sind.

6. Stator nach Anspruch 1, **dadurch gekennzeichnet, daß** jedes der drehbaren Zungenelemente (20) mit einem Hakenmittel (23) zur Einschnappbefestigung an den dazwischenliegenden Wandabschnitt (14) des benachbarten Zahns versehen sind.

7. Stator nach Anspruch 5 und 6, **dadurch gekennzeichnet**; daß sich die Einschnappbefestigungsmittel (23) auf jedem der drehbaren Zungenelemente (20) an einer freien Seite gegenüber der Seite (21) befinden, die mit den dazwischenliegenden Wandabschnitten (14) verbunden ist.

8. Stator nach Anspruch 1, **dadurch gekennzeichnet, daß** in der ersten Lage die gesamte Abmessung der drehbaren Zungenelemente in den entsprechenden tangentiellen Ebenen innerhalb eines Kreises (C) enthalten ist, der die entsprechenden dazwischenliegenden Wandabschnitte (14) umgibt.

9. Stator nach Anspruch 4, **dadurch gekennzeichnet, daß** die drehbaren Zungenelemente (20) in der ersten Lage gemeinsam geformt sind, die mit dem radialen äußeren Wandabschnitt (15) verbunden ist, der sich auf demselben Zahn mit Hilfe eines dünnen behelfsmäßigen Verbindungsabschnittes befindet.

## Revendications

1. Stator pour moteur électrique comprenant un rotor intérieur et un stator extérieur, le stator comprenant une pluralité de masses polaires (10) munies de dents radiales (11) sur lesquelles est moulé solidairement un revêtement isolé électriquement (12), le revêtement formant sur chaque dent (11) une pluralité de parties de paroi (13, 14, 15) sensiblement perpendiculaires à cette même dent, lesdites parties de paroi étant espacées radialement de façon à définir les sièges d'enroulement d'une pluralité de bobines agencées en au moins deux couronnes espacées radialement (16, 17), les parties de paroi intermédiaires (14) entre deux couronnes adjacentes (16, 17) étant pourvues d'éléments isolants à languette articulée (20), lesdits éléments isolants à languette ayant une première position passive dans laquelle lesdits éléments (20) sont orientés radialement pour permettre l'enroulement d'une couronne de bobines (16) dans les sièges, délimitée à l'extérieur par lesdites parties de paroi intermédiaires (14), et une deuxième position active dans laquelle lesdits éléments à languette (20) sont orientés tangentiellement et fixés à la partie de paroi intermédiaire (14) de la dent adjacente pour isoler les longueurs de fil électrique reliant deux bobines adjacentes appartenant à une même couronne (17) d'enroulements, délimitée à l'intérieur par les parties de paroi intermédiaires (14).

2. Stator selon la revendication 1, **caractérisé en ce que** lesdits éléments à languette (20) sont constitués de moyens de logement de fil (22) en forme de poches destinés à contenir les longueurs de fil entre deux bobines adjacentes.

3. Stator selon la revendication 2, **caractérisé en ce que** lesdits moyens de logement de fil (22) forment un guide incliné dans la direction reliant l'endroit auquel le fil sort d'une bobine à l'endroit auquel le fil commence à former la bobine adjacente.

4. Stator selon la revendication 1, **caractérisé en ce que** lesdits éléments à languette articulée (20) sont moulés solidairement d'une seule pièce avec ledit revêtement (12).

5. Stator selon la revendication 4, **caractérisé en ce que** lesdits éléments à languette articulée (20) sont reliés auxdites parties de paroi intermédiaires (14) à l'aide de parties d'articulation verticales flexibles et plus fines (21) moulées solidairement.

6. Stator selon la revendication 1, **caractérisé en ce que** chacun desdits éléments à languette articulée (20) est pourvu de moyens d'accrochage (23) pour permettre un verrouillage rapide à la partie de paroi intermédiaire (14) de la dent adjacente.

7. Stator selon les revendications 5 et 6, **caractérisé en ce que** lesdits moyens d'accrochage à verrouillage rapide (23) sont situés sur chacun desdits éléments à languette articulée (20) sur un côté libre opposé au côté connecté (21) aux parties de paroi intermédiaires (14).

8. Stator selon la revendication 1, **caractérisé en ce que** dans ladite première position, la dimension totale des éléments à languette articulée dans les plans tangentiels concernés est contenue à l'intérieur d'un cercle (c) qui circonscrit les parties de paroi intermédiaires (14) concernées,

9. Stator selon la revendication 4, **caractérisé en ce que** lesdits éléments à languette articulée (20) sont moulés solidairement dans ladite première position en étant joints à la partie de paroi radialement extérieure (15) disposée sur la même dent au moyen d'une fine partie de connexion provisoire.
